# EUROPÄISCHE PATENTSCHRIFT

(11) **EP 0 854 294 B1**
(45) Veröffentlichungstag und Bekanntmachung des Hinweises auf die Patenterteilung: **20.11.2002**
(21) Anmeldenummer: 98100211.6
(22) Anmeldetag: 08.01.1998
(51) Int. Cl.: F04D 29/22

(54) **Laufrad einer Kreiselpumpe**
Impeller for centrifugal pump
Rouet pour pompe centrifuge

(30) Priorität: 16.01.1997 DE 19701297
(43) Veröffentlichungstag der Anmeldung: 22.07.1998
(73) Patentinhaber: WILO AG, 44263 Dortmund (DE)
(72) Erfinder: Genster, Albert, 45768 Marl (DE)
(74) Vertreter: COHAUSZ DAWIDOWICZ HANNIG & PARTNER

(56) Entgegenhaltungen:
- DE-A- 1 403 052
- DE-A- 2 306 409
- DE-A- 3 713 310
- DE-C- 3 701 085
- FR-A- 2 366 469
- GB-A- 1 048 364

## Beschreibung

Die Erfindung betrifft ein Laufrad einer Kreiselpumpe mit einem den zentralen Einlaß bildenden ringförmigen Oberteil, einem dem Antrieb zugewandten kreisscheibenförmigen Unterteil und mehreren zwischen Oberteil und Unterteil befestigten Schaufeln.

Es ist bekannt, Laufräder der eingangs genannten Art einteilig mit einem Schmelzkern oder mehrteilig durch Ultraschallschweißung herzustellen. Beide Herstellungsverfahren sind aufwendig und ergeben keine genügend geringen Fertigungstoleranzen. Auch sind Schaufeln mit Krümmungen in dreidimensionaler Geometrie kaum herstellbar.

Aufgabe der Erfindung ist es, ein Laufrad der eingangs genannten Art so zu verbessern, daß es einfach und preisgünstig in möglichst wenig Arbeitsschritten herstellbar ist.

Diese Aufgabe wird erfindungsgemäß dadurch gelöst, - daß Oberteil und Unterteil voneinander getrennte, miteinander verbindbare Teile sind,
- daß jede Schaufel nur am Oberteil oder nur am Unterteil angeformt ist,
- daß jede Schaufel an ihrer freien Kante, die dem Oberteil oder Unterteil abgewandt ist, an dem sie angeformt ist, mindestens einen Vorsprung aufweist, mit dem sie in eine Ausnehmung oder Öffnung des Unterteils bzw. Oberteils hineinreicht, wenn Oberteil und Unterteil aneinander befestigt sind, und
- daß die Ausnehmungen oder Öffnungen jeweils Freistellungen aufweisen, die im zusammengesetzten Zustand von Oberteil und Unterteil die Vorsprünge umgeben und in die im zusammengesetzten Zustand Kunststoff einspritzbar ist.

Das Laufrad kann im Ein-, Zwei-, Drei- oder Vier-Komponentenverfahren ohne Ultraschallschweißvorgang bzw. ohne Schmelzkerne hergestellt werden. Dies sowohl in Einzelwerkzeugen mit manuellen Einlagen als auch in Mehrkomponentenwerkzeugen vollautomatisch. In demselben Werkzeug können erst Oberteil und Unterteil gespritzt werden und dann sind Oberteil und Unterteil zusammenfügbar, um dann die verbindende Kunststoffmasse einzuspritzen. Die Vorteile sind u.a.:
- unlösbare Verbindung
- geringere Fertigungstoleranzen im Rund- und Planlauf gegenüber geschweißten Laufrädern
- hochwertige und somit meist kostenintensive Materialien können gezielt in Teilbereichen eingesetzt werden
- geringere Stückkosten gegenüber in Schmelzkerntechnik hergestellten Laufrädern
- höherer Wirkungsgrad gegenüber geschweißten Laufrädern, bei denen keine 3D-Geometrie der Schaufeln möglich ist.

Vorzugsweise wird vorgeschlagen, daß jede zweite Schaufel an dem Oberteil und die dazwischen liegenden Schaufeln am Unterteil angeformt sind. Hierdurch haben die Schaufeln während ihrer Herstellung ein doppelt großen Abstand voneinander als später beim fertigen Laufrad, so daß die Schaufeln mit hoher Exaktheit und in jeder Krümmungsart herstellbar sind. Damit kann auch eine hohe Anzahl von Schaufeln beim Laufrad angeordnet werden.

Eine optimale Verteilung der die Teile verbindenden Kunststoffmasse und eine hohe Stabilität des Laufrades werden dann erreicht, wenn der eingespritzte Kunststoff der Freistellungen an dem Außenrand des Oberteils, des Unterteils und/oder der zentralen Einlaßöffnung jeweils einen koaxialen Ring bildet, der mit dem in den Freistellungen einliegenden Kunststoff verbunden ist. Hierbei kann der eingespritzte Kunsttoff der zentralen Einlaßöffnung eine Dichtfläche zur Pumpengehäuseinnenwand bilden.

Vorzugsweise wird vorgeschlagen, daß die im Unterteil zentral angeordnete, insbesondere der Befestigung an der Welle des Antriebsmotors dienende Nabe von derselben in den Freistellungen einliegenden Kunststoffspritzmasse in demselben Spritzvorgang gebildet ist. Hierbei kann die Nabe mit dem in den Freistellungen einliegenden Kunststoff verbunden sein, die sich in dem Unterteil befinden.

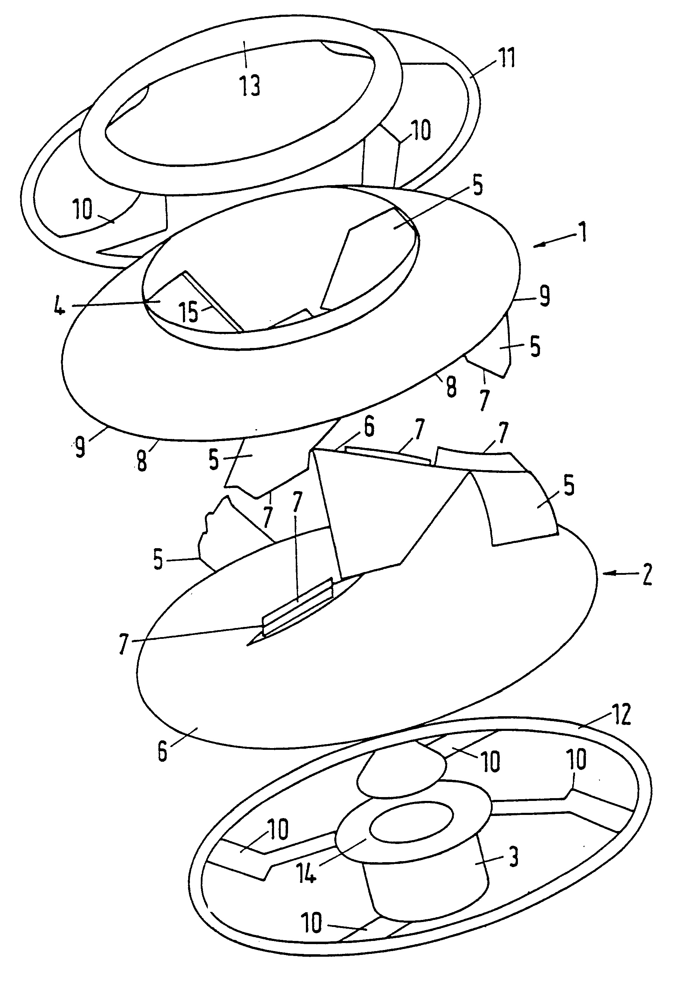

Ein Ausführungsbeispiel des erfindungsgemäßen Laufrades ist in der Zeichnung in einem axial auseinandergezogenen Zustand dargestellt, wobei die im letzten Arbeitsschritt eingespritzten Kunststoffverbindungsmassen von Oberteil und Unterteil getrennt gezeichnet sind.

Das Laufrad einer Kreiselpumpe ist in allen wesentlichen Teilen aus Kunststoff gefertigt und weist ein ringförmiges Oberteil 1 und ein kreischeibenförmiges Unterteil 2 auf. Diese zwei Teile sind aneinander koaxial befestigt, wobei das Unterteil 2 eine mittige koaxiale Nabe 3 besitzt, mit der das Laufrad am Wellenende eines Elektromotors befestigbar ist. Das Oberteil 1 weist auf der dem Unterteil 2 zugewandten Seite eine koaxiale Einlaßöffnung 4 auf, durch die die zu fördernde Flüssigkeit angesaugt wird.

Zwischen Oberteil 1 und Unterteil 2 besteht ein Abstand, in dem die in etwa radial angeordneten und 3D-gekrümmten Schaufeln 5 befestigt sind. Hierbei ist jede zweite Schaufel 5 an der Unterseite des Oberteils 1 angeformt und die dazwischen liegenden Schaufeln 5 sind an der Oberseite des Unterteils 2 angeformt. Alle Schaufeln 5 besitzen an ihrer freien Kante 6, die später am anderen Teil 1 bzw. 2 nach dem Zusammensetzen anliegt, Vorsprünge 7, die in Öffnungen des anderen Teils 8 im zusammengesetzten Zustand hineinreichen. Die Vorsprünge 7 durchdringen hierbei jeweils das Ober- bzw. Unterteil bis zur Außenseite, wobei in der jeweiligen Außenseite Freistellungen 9 bzw. Ausnehmungen rundum oder zumindest seitlich der Öffnungen 8 und damit der Vorsprünge 7 in der Oberseite des Oberteils 1 bzw. in der Unterseite.

Nach dem Zusammensetzen von Oberteil 1 und Unterteil 2 ragen die Vorsprünge 7 in die Freistellungen 9 hinein und im zusammengesetzten Zustand werden die Freistellungen 9 durch eine Kunststoffmasse 10 ausgefüllt. Diese Verbindungsmasse 10 wird zu den Freistellungen 9 über koaxiale Ringe 11 bis 14 zu den Freistellungen gebracht. Hierbei bilden die Ringe 11 und 12 die seitlichen Außenkanten von Oberteil 1 und Unterteil 2. Der Ring 13 bildet die Außenkante der Einlaßöffnung 4 bzw. des Saughalses, wobei dieser Ring 13 als axiale Lagerung an der Pumpengehäusewand und damit als Dichtfläche an der Pumpengehäuseinnenwand verwendet wird.

Die Nabe 3 kann ein getrennt von den Teilen 1 und 2 hergestelltes Teil sein. Sie kann aber auch durch die Verbindungsmasse gespritzt werden, so daß der Ring 14 einstückig mit der Nabe 3 gespritzt wird. Ferner kann in der Nabe 3 ein insbesondere ringförmiges Teil koaxial umspritzt sein, das den Halt zum Wellenende des Antriebsmotors bildet.

Unter 3D-Schaufeln bzw. dreidimensionalen Schaufeln 5 werden zweifach gekrümmte Schaufeln verstanden, die im Bereich der Einlaßöffnung mit ihrer Anfangskante 15 in einer radialen Ebene schräg zur Drehachse liegen und danach in zweifacher Krümmung sich zwischen Oberteil und Unterteil erstrecken bis sie am äußeren Rand des Laufrades enden.

## Patentansprüche

1. Laufrad einer Kreiselpumpe mit einem den zentralen Einlaß (4) bildenden ringförmigen Oberteil (1), einem dem Antrieb zugewandten kreisscheibenförmigen Unterteil (2) und mehreren zwischen Oberteil und Unterteil befestigten Schaufeln (5), **dadurch**
**gekennzeichnet,**
- **daß** Oberteil (1) und Unterteil (2) voneinander getrennte, miteinander verbindbare Teile sind,
- **daß** jede Schaufel (5) nur am Oberteil (1) oder nur am Unterteil (2) angeformt ist,
- **daß** jede Schaufel (5) an ihrer freien Kante (6), die dem Oberteil (1) oder Unterteil (2) abgewandt ist, an dem sie angeformt ist, mindestens einen Vorsprung (7) aufweist, mit dem sie in eine Ausnehmung oder Öffnung (8) des Unterteils (2) bzw. Oberteils (1) hineinreicht, wenn Oberteil (1) und Unterteil (2) aneinander befestigt sind, und
- **daß** die Ausnehmungen oder Öffnungen (8) jeweils Freistellungen (9) aufweisen, die im zusammengesetzten Zustand von Oberteil und Unterteil die Vorsprünge (7) umgeben und in die im zusammengesetzten Zustand Kunststoff einspritzbar ist.

2. Laufrad nach Anspruch 1, **dadurch gekennzeichnet,daß** jede zweite Schaufel (5) an dem Oberteil (1) und die dazwischen liegenden Schaufeln (5) am Unterteil (2) angeformt sind.

3. Laufrad nach Anspruch 1 oder 2, **dadurch gekennzeichnet, daß** der eingespritzte Kunststoff der Freistellungen (9) an dem Außenrand des Oberteils (1), des Unterteils (2) und/oder der zentralen Einlaßöffnung (4) jeweils einen koaxialen Ring (11, 12, 13) bildet, der mit dem in den Freistellungen (9) einliegenden Kunststoff verbunden ist.

4. Luafrad nach Anspruch 3, **dadurch gekennzeichnet, daß** der eingespritzte Kunststoff (11) der zentralen Einlaßöffnung (4) eine Dichtfläche zur Pumpengehäuseinnenwand bildet.

5. Laufrad nach einem der vorhergehenden Ansprüche, **dadurch gekennzeichnet, daß** die im Unterteil (2) zentral angeordnete, insbesondere der Befestigung an der Welle des Antriebsmotors dienende Nabe (3) von derselben in den Freistellungen (9) einliegenden Kunststoffspritzmasse in demselben Spritzvorgang gebildet ist.

6. Laufrad nach Anspruch 5, **dadurch gekennzeichnet, daß** die Nabe (3) mit dem in den Freistellungen (9) einliegenden Kunststoff verbunden ist, die sich in dem Unterteil (2) befinden.

## Claims

1. An impeller for a centrifugal pump, comprising an annular upper part (1) forming the central inlet (4), a lower part (2) in the form of a circular disc facing the drive, and a plurality of blades (5) fixed between the upper part and the lower part, **characterised in that**
- the upper part (1) and the lower part (2) are parts which are separate from each other but which can be joined to each other,
- that each blade (5) is integrally formed on the upper part (1) only or on the lower part (2) only,
- that each blade (5) has a projection (7) at its free edge (6) which is remote from the upper part (1) or lower part (2) on which it is integrally formed, which protrusion extends into a recess or opening (8) in the lower part (2) or upper part (1), respectively, when the upper part (1) and lower part (2) are fixed to each other, and
- that the recesses or openings (8) each comprise vacant positions (9) which surround the projections (7) when the upper part and lower part are in their assembled state, and into which a plastics material can be injection moulded in the assembled state.

2. An impeller according to claim 1, **characterised in that** each second blade (5) is integrally formed on the upper part (1) and the blades (5) situated therebetween are integrally formed on the lower part (2).

3. An impeller according to claims 1 or 2, **characterised in that** the injection moulded plastics material of the vacant positions (9) at the outer edge of the upper part (1), of the lower part (2) and/or of the central inlet opening (4) forms a coaxial ring (11, 12, 13) in each case which is joined to the plastics material which is enclosed in the vacant positions (9).

4. An impeller according to claim 3, **characterised in that** the injection moulded plastics material (11) of the central inlet opening (4) forms a sealing face towards the pump housing inner wall.

5. An impeller according to any one of the preceding claims, **characterised in that** the hub (3) which is centrally disposed on the lower part (2) and which serves in particular for fixing to the shaft of the drive motor, is formed by the same plastics injection moulding material which is enclosed in the vacant positions (9), in the same injection moulding operation.

6. An impeller according to claim 5, **characterised in that** the hub (3) is joined to the plastics material which is enclosed in the vacant positions (9) situated in the lower part (2).

## Revendications

1. Roue mobile d'une pompe centrifuge avec une pièce supérieure (1) annulaire formant l'admission (4) centrale, une pièce inférieure (2), en forme de secteur de cercle, tournée vers l'entraînement et plusieurs ailettes (5) fixées entre la pièce supérieure et la pièce inférieure,
**caractérisée en ce**
- **que** la pièce supérieure (1) et la pièce inférieure (2) sont des pièces séparées l'une de l'autre pouvant être reliées l'une à l'autre,
- **que** chaque ailette (5) est conformée seulement sur la pièce supérieure (1) ou seulement sur la pièce inférieure (2),
- **que** chaque ailette (5) présente, sur son arête libre (6) qui est écartée de la pièce supérieure (1) ou de la pièce inférieure (2) sur laquelle elle est conformée, au moins une saillie (7) par laquelle elle pénètre dans un évidement ou une ouverture (8) de la pièce inférieure (2) ou respectivement de la pièce supérieure (1) lorsque la pièce supérieure (1) et la pièce inférieure (2) sont fixées l'une à l'autre et
- **que** les évidements ou les ouvertures (8) présentent respectivement des emplacements libres (9) qui, à l'état assemblé de la pièce supérieure et de la pièce inférieure, entourent les saillies (7) et dans lesquelles, à l'état assemblé, une matière synthétique peut être injectée.

2. Roue mobile selon la revendication 1,
**caractérisée en ce qu'**une ailette (5) sur deux est conformée sur la pièce supérieure (1) et les ailettes (5) se trouvant entre elles sont conformées sur la pièce inférieure (2).

3. Roue mobile selon la revendication 1 ou 2,
**caractérisée en ce que** la matière synthétique injectée des emplacements libres (9) forme, sur le bord extérieur de la pièce supérieure (1), de la pièce inférieure (2) et/ou de l'ouverture d'admission (4) centrale, respectivement une bague (11, 12, 13) coaxiale qui est reliée à la matière synthétique logée dans les emplacements libres (9).

4. Roue mobile selon la revendication 3,
**caractérisée en ce que** la matière synthétique (11) injectée de l'ouverture d'admission (4) centrale forme une surface d'étanchéité par rapport à la paroi intérieure du carter de pompe.

5. Roue mobile selon l'une des revendications précédentes,
**caractérisée en ce que** le moyeu (3) disposé centralement dans la pièce inférieure (2), servant en particulier à la fixation à l'arbre du moteur d'entraînement, est formé par la même masse de matière synthétique logée dans les emplacements libres (9) dans la même passe d'injection.

6. Roue mobile selon la revendication 5,
**caractérisée en ce que** le moyeu (3) est relié à la matière synthétique logée dans les emplacements libres (9) qui se trouvent dans la pièce inférieure (2).
